# EUROPÄISCHE PATENTANMELDUNG

(11) **EP 2 610 103 A1**
(43) Veröffentlichungstag der Anmeldung: **03.07.2013**
(21) Anmeldenummer: 12199384.4
(22) Anmeldetag: 27.12.2012
(51) Int. Cl.: B60N 2/02, B60R 21/01

(54) **Verfahren und Vorrichtung zur Steuerung eines Aktuators und Insassenschutzsystem**

(30) Priorität: 27.12.2011 DE 102011089995
(71) Anmelder: ROBERT BOSCH GMBH, 70442 Stuttgart (DE)
(72) Erfinder: Freienstein, Heiko, 71263 Weil Der Stadt (DE); Koehler, Armin, 74343 Sachsenheim (DE)

(57) **Zusammenfassung**

Die Erfindung betrifft ein Verfahren zur Steuerung eines Aktuators (104; 204) einer sitzbasierten Insassenschutzvorrichtung eines Fahrzeugs. Das Verfahren umfasst einen Schritt des Empfangens eines Auslösesignals, das ausgebildet ist, um eine Auslöseentscheidung zum Auslösen der sitzbasierten Insassenschutzvorrichtung anzuzeigen und einen Schritt des Erzeugens eines Sperrsignals zum Sperren des Aktuators (104; 204) abhängig von dem Auslösesignal und einem Freigabesignal.

## Beschreibung

### Stand der Technik

Die vorliegende Erfindung bezieht sich auf ein Verfahren zur Steuerung eines Aktuators einer sitzbasierten Insassenschutzvorrichtung eines Fahrzeugs, auf eine entsprechende Vorrichtung sowie auf ein entsprechendes Computerprogrammprodukt und auf ein Insassenschutzsystem.

Die WO 2004 103 779 A1 beschreibt ein Insassenschutzsystem für Fahrzeuge, das eine Sitzverstelleinrichtung mit mindestens einem Aktuator zum Verstellen eines Sitzes aufweist.

### Offenbarung der Erfindung

Vor diesem Hintergrund wird mit der vorliegenden Erfindung ein Verfahren zur Steuerung eines Aktuators einer sitzbasierten Insassenschutzvorrichtung eines Fahrzeugs, weiterhin eine Vorrichtung, die dieses Verfahren verwendet, ein Insassenschutzsystem sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Eine sitzbasierte Insassenschutzvorrichtung eines Fahrzeugs kann bei einem Unfall ausgelöst werden, um einen Insassen des Fahrzeugs zu schützen. Dabei kann ein Aktuator zum Auslösen der Insassenschutzvorrichtung eingesetzt werden. Durch eine geeignete Ansteuerung des Aktuators kann ein korrekter Einsatz des Aktuators und somit auch der Insassenschutzvorrichtung gewährleistet werden. Wird eine Fehlfunktion erkannt, die zu einer fälschlichen Betätigung der Insassenschutzvorrichtung führt, so kann der Aktuator gesperrt werden, um die fälschliche Betätigung der Insassenschutzvorrichtung zu verhindern.

Ein Verfahren zur Steuerung eines Aktuators einer sitzbasierten Insassenschutzvorrichtung eines Fahrzeugs umfasst die folgenden Schritte:

Empfangen eines Auslösesignals, das ausgebildet ist, um eine Auslöseentscheidung zum Auslösen der sitzbasierten Insassenschutzvorrichtung anzuzeigen; und

Erzeugen eines Sperrsignals zum Sperren des Aktuators abhängig von dem Auslösesignal und einem Freigabesignal.

Bei dem Fahrzeug kann es sich um ein Fahrzeug zur Personenbeförderung, beispielsweise um einen Personenkraftwagen, oder um einen Lastkraftwagen handeln. Bei der sitzbasierten Insassenschutzvorrichtung kann es sich um eine mit einem Sitz des Fahrzeugs gekoppelte Insassenschutzvorrichtung handeln. Die Insassenschutzvorrichtung kann beispielsweise eine Vorrichtung zur aktiven Sitzverstellung umfassen. Die Insassenschutzvorrichtung kann beim Auftreten eines Unfalls des Fahrzeugs betätigt werden, um den Insassen zu schützen. Der Aktuator kann ausgebildet sein, um ein Element der Insassenschutzvorrichtung zu betätigen, beispielsweise zu bewegen. Der Aktuator kann einen Motor zum Betätigen der Insassenschutzvorrichtung umfassen. Die Auslöseentscheidung kann beispielsweise ansprechend auf einen erkannten oder unmittelbar bevorstehenden Unfall des Fahrzeugs von einer geeigneten Auslöselogik getroffen werden. Ansprechend auf die durch das Auslösesignal übertragene Auslöseentscheidung kann der Aktuator aktiviert werden, um die Insassenschutzvorrichtung zu betätigen. Durch das Sperren des Aktuators kann eine Funktion des Aktuators gesperrt werden, sodass der Aktuator die Insassenschutzvorrichtung nicht oder nicht mehr betätigen kann. Dabei kann die Sperre auch dann wirken, wenn ein Auslösesignal vorliegt. Das Sperrsignal kann direkt an den Aktuator oder an eine Einrichtung zum Steuern eines Betriebs des Aktuators ausgegeben werden. Das Freigabesignal kann eine Information über den Aktuator oder die Insassenschutzvorrichtung umfassen, die zusammen mit dem Auslösesignal verwendet werden kann, um eine Sperre des Aktuators auszulösen oder aufzuheben. Das Sperrsignal schafft Redundanz bei der Aktivierung oder Sperrung der Insassenschutzvorrichtung.

Gemäß einer Ausführungsform kann das Sperrsignal geeignet sein, um eine Energieversorgung des Aktuators zu unterbrechen. Beispielsweise kann das Sperrsignal geeignet sein, um ein Schließen oder ein Öffnen eines Schalters zu steuern. Der Schalter kann ausgebildet sein, um die Energieversorgung des Aktuators zu unterbrechen oder freizugeben. Wird die Energieversorgung des Aktuators unterbrochen, so kann die Insassenschutzvorrichtung trotz einer bestehenden Auslöseentscheidung nicht betätigt werden. Dabei lässt sich eine Einrichtung zur Unterbrechung der Energieversorgung, die durch das Sperrsignal gesteuert werden kann, einfach und kostengünstig realisieren.

Das Freigabesignal kann ausgebildet sein, um eine Zeitdauer ab einer Auslösung der Insassenschutzvorrichtung anzuzeigen. Im Schritt des Erzeugens kann das Sperrsignal zum Sperren des Aktuators abhängig von der von dem Freigabesignal angezeigten Zeitdauer erzeugt werden. Ein Beginn der Zeitdauer kann mit einem Beginn der Auslösung der Insassenschutzvorrichtung oder mit einem Treffen der Auslöseentscheidung für die Insassenschutzvorrichtung zusammenfallen. Beispielsweise kann das Freigabesignal fortlaufend Zeitwerte übertragen, die anzeigen, wie lange die Insassenschutzvorrichtung bereits ausgelöst ist. Ist die Zeitdauer vorbestimmt, so kann das Freigabesignal einen Ablauf der Zeitdauer anzeigen. Auf diese Weise kann der Aktuator beispielsweise bei Erreichen oder bei Überschreiten der Zeitdauer gesperrt werden, obwohl die Auslöseentscheidung weiterhin gültig ist. Auf diese Weise kann eine Überbetätigung des Aktuators oder der Insassenschutzvorrichtung verhindert werden.

Das Freigabesignal kann ausgebildet sein, um einen Zustand einer Energieversorgung des Aktuators anzuzeigen. Im Schritt des Erzeugens kann das Sperrsignal erzeugt werden, wenn das Auslösesignal keine Auslöseentscheidung zum Auslösen der Insassenschutzvorrichtung anzeigt und das Freigabesignal eine zur Auslösung der Insassenschutzvorrichtung geeignete Energieversorgung anzeigt. Beispielsweise kann das Freigabesignal anzeigen, ob an dem Aktuator eine zum Betreiben des Aktuators geeignete Betriebsspannung anliegt. Auch kann das Freigabesignal anzeigen, ob eine Energieversorgung für den Aktuator eingeschaltet oder ausgeschaltet ist. Auf diese Weise kann der Aktuator gesperrt werden, wenn keine gültige Auslöseentscheidung für die Insassenschutzvorrichtung vorliegt.

Das Freigabesignal kann ausgebildet sein, um einen Betriebszustand des Aktuators anzuzeigen. Im Schritt des Erzeugens kann das Sperrsignal erzeugt werden, wenn das Auslösesignal keine Auslöseentscheidung zum Auslösen der Insassenschutzvorrichtung anzeigt und das Freigabesignal einen Betrieb des Aktuators anzeigt. Auf diese Weise kann eine fälschliche Aktivierung des Aktuators erkannt und der Aktuator darauf gesperrt werden.

Ferner kann das Freigabesignal ausgebildet sein, um einen Betätigungszustand des Aktuators anzuzeigen. Dabei kann im Schritt des Erzeugens das Sperrsignal erzeugt werden, wenn das Auslösesignal eine Auslöseentscheidung zum Auslösen der Insassenschutzvorrichtung anzeigt und das Freigabesignal einen von einem Sollzustand abweichenden Betätigungszustand der Insassenschutzvorrichtung anzeigt. Beispielsweise kann das Sperrsignal erzeugt werden, wenn das Freigabesignal anzeigt, dass der Sollzustand überschritten ist. Der Betätigungszustand kann beispielsweise eine Position, beispielsweise eine Verstellposition oder eine Ausfahrposition eines Elements des Aktuators oder einen Verstellweg kennzeichnen. Der Sollzustand kann einen Endzustand einer Betätigung des Aktuators, beispielsweise eine Endposition oder einen maximalen Verstellweg, kennzeichnen. Auf diese Weise kann der Aktuator bei einer vorliegenden Auslöseentscheidung solange freigegeben werden, bis der Sollzustand erreicht ist. Beim Erreichen oder Überschreiten des Sollzustands kann der Aktuator dann trotz vorliegender Auslöseentscheidung gesperrt werden.

Dazu kann im Schritt des Empfangens ein Wert des Sollzustands empfangen werden. Auf diese Weise kann der Sollzustand beispielsweise an ein aktuelles Unfallgeschehen angepasst werden.

Die vorliegende Erfindung schafft ferner eine Vorrichtung zur Steuerung eines Aktuators einer sitzbasierten Insassenschutzvorrichtung eines Fahrzeugs, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät, beispielsweise ein Steuergerät, verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ein Insassenschutzsystem für ein Fahrzeug weist folgende Merkmale auf:
einen Aktuator zum Betätigen einer sitzbasierten Insassenschutzvorrichtung;
einen Schalter zum Unterbrechen einer Energieversorgung für den Aktuator; und
eine Vorrichtung Steuerung eines Aktuators einer sitzbasierten Insassenschutzvorrichtung eines Fahrzeugs, die ausgebildet ist, um das Sperrsignal zum Sperren des Aktuators zu erzeugen und als Schaltsignal an den Schalter auszugeben.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine schematische Darstellung eines Fahrzeugs gemäß einem Ausführungsbeispiel der vorliegenden Erfindung;
- Fig. 2: ein Blockschaltbild eines Systems zur Ansteuerung von Rückhaltemitteln gemäß einem Ausführungsbeispiel der vorliegenden Erfindung;
- Fig. 3: ein Blockschaltbild eines Systems zur Ansteuerung von Rückhaltemitteln gemäß einem weiteren Ausführungsbeispiel der vorliegenden Erfindung;
- Fig. 4: ein Blockschaltbild eines Systems zur Ansteuerung von Rückhaltemitteln gemäß einem weiteren Ausführungsbeispiel der vorliegenden Erfindung;
- Fig. 5: ein Blockschaltbild eines Systems zur Ansteuerung von Rückhaltemitteln gemäß einem weiteren Ausführungsbeispiel der vorliegenden Erfindung;
- Fig. 6: ein Blockschaltbild eines Systems zur Ansteuerung von Rückhaltemitteln gemäß einem weiteren Ausführungsbeispiel der vorliegenden Erfindung; und
- Fig. 7: ein Ablaufdiagramm eines Verfahrens zur Steuerung eines Aktuators gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

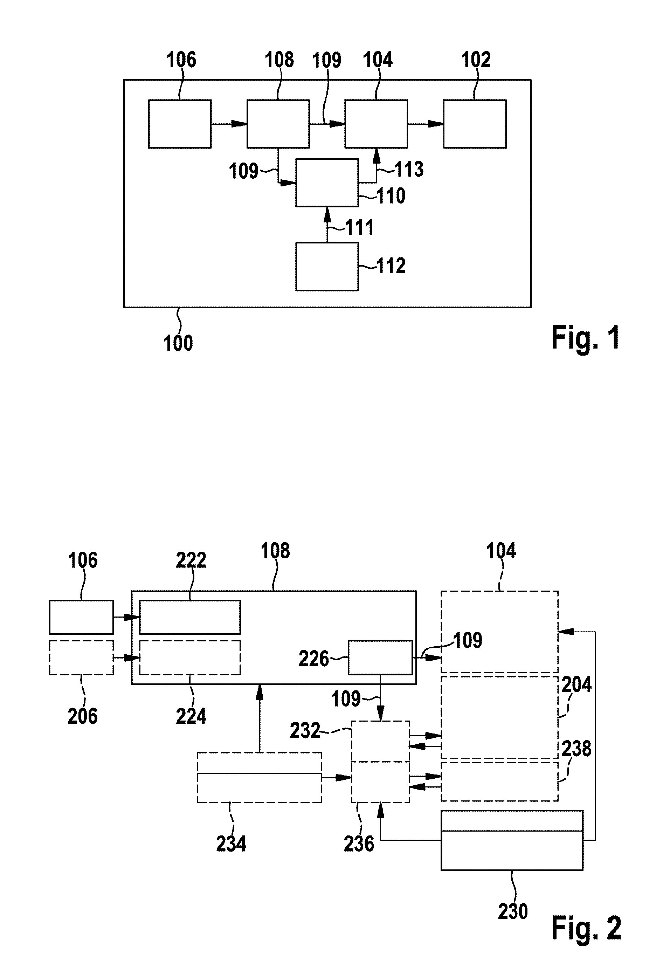

Fig. 1 zeigt eine schematische Darstellung eines Fahrzeugs 100 gemäß einem Ausführungsbeispiel der vorliegenden Erfindung. Das Fahrzeug 100 weist ein Insassenschutzmittel 102 auf, das über einen Aktuator 104 ausgelöst oder betätigt wird. Dazu ist der Aktuator 104 mit dem Insassenschutzmittel 102 gekoppelt. Um das Insassenschutzmittel 102 bei einem Unfall des Fahrzeugs 100 auslösen zu können, weist das Fahrzeug 100 einen Sensor 106 und eine Auslöselogik 108 auf.

Der Sensor 106 ist ausgebildet, um ein Sensorsignal an die Auslöselogik 108 bereitzustellen. Bei dem Sensor 106 kann es sich um einen Sensor handeln, der eine bereits erfolgte oder eine bevorstehende Kollision des Fahrzeugs 100 erkennen kann. Die Auslöselogik 108 ist ausgebildet, um basierend auf dem Sensorsignal eine Auslöseentscheidung für das Insassenschutzmittel 102 zu treffen und ein Auslösesignal 109 an den Aktuator 104 auszugeben. Der Aktuator 104 ist ausgebildet, um ansprechend auf das Auslösesignal 109 das Insassenschutzmittel 102 auszulösen oder zu betätigen. Beispielsweise kann der Aktuator 104 einen Motor aufweisen, der ansprechend auf das Auslösesignal 109 betrieben wird.

Das Fahrzeug 100 weist eine Vorrichtung 110 zur Steuerung des Aktuators 104 des Insassenschutzmittels 102 auf. Die Vorrichtung 110 ist ausgebildet, um das Auslösesignal 109 von der Auslöselogik 108 und ein Freigabesignal 111 von einer Freigabeeinrichtung 112 zu empfangen und basierend auf dem Auslösesignal 109 und dem Freigabesignal 111 eine Entscheidung darüber zu treffen, ob der Aktuator 104 gesperrt werden soll oder nicht. Bei einer Sperrung des Aktuators 104 kann der Aktuator 104 das Insassenschutzmittel 102 nicht betätigen oder auslösen. Die Vorrichtung 110 ist ausgebildet, um abhängig von der Entscheidung über das Sperren oder nicht Sperren des Aktuators 104 ein Sperrsignal 113 an den Aktuator 104 auszugeben. Gemäß diesem Ausführungsbeispiel weist das Sperrsignal 113 einen ersten Zustand auf, wenn der Aktuator 104 gesperrt werden soll und einen zweiten Zustand auf, wenn der Aktuator 104 nicht gesperrt werden soll. Gemäß diesem Ausführungsbeispiel ist die Freigabeeinrichtung 112 ausgebildet, um das Freigabesignal 111 abhängig von einem Zustand des Aktuators 104 oder eines Zeitpunkts einer Aktivierung des Aktuators 104 oder des Insassenschutzmittels 102 zu erzeugen. Somit kann durch das Sperrsignal 113 eine durch die Auslöselogik 108 getroffene Auslöseentscheidung revidiert werden. Andererseits kann der Aktuator 104 durch das Sperrsignal 113 gesperrt werden, wenn die Auslöselogik 108 keine Betätigung des Aktuators 104 über das Auslösesignal 109 ausgelöst hat und von der Freigabeeinrichtung 112 trotzdem ein Betrieb des Aktuators 104 erkannt wird.

Bei dem Insassenschutzmittel 102 kann es sich um ein beliebiges Insassenschutzmittel oder Rückhaltemittel handlen. Im Folgenden werden beispielhaft Ausführungsbeispiele von Vorrichtungen zur redundanten Ansteuerung von sitzbasierten Rückhaltemitteln beschrieben.

Somit kann es sich bei dem Insassenschutzmittel 102 um ein sitzbasiertes Rückhaltemittel handeln, das durch eine schnelle Verstellung einen Sitz des Fahrzeugs 100 in eine crashoptimale Position bringen kann. Auch kann es sich bei dem Insassenschutzmittel 102 um ein vorauslösendes, voranstoßendes System handeln, welches im Frontcrash mittels Airbag oder Schultergurt den Insassen in der Vorcrashphase so vorbeschleunigt, dass sich die Geschwindigkeit durch den Crashpuls und die die Geschwindigkeit der Vorbeschleunigung destruktiv überlagern. Bei dem Aktuator 104 kann es sich um einen elektromotorischen sitzbasierten Aktuator handeln, der ausgebildet ist, um die Kinetik des Insassen in der Precrashphase maßgeblich zu beeinflussen.

Durch die in den Figuren gezeigten Ausführungsbeispiele kann eine Absicherung eines Insassenschutzmittels 102, beispielsweise einer sitzbasierten Insassenschutzvorrichtung, realisiert werden, sodass gewisse Einfachfehler im System abgefangen werden können. Eine solche Vorrichtung ist insbesondere dann sinnvoll, wenn die Insassenkinetik besonders stark durch die Aktuatorik 104 beeinflusst werden kann, z. B. durch ein vorbeschleunigendes System, das dem Insassen einen starken Impuls erteilt.

Fig. 2 zeigt ein Blockschaltbild eines Systems zur Ansteuerung von Rückhaltemitteln gemäß einem Ausführungsbeispiel der vorliegenden Erfindung. Dabei handelt es sich um ein beispielhafte Elektrisch/Elektronische-Architektur eines crashaktiven intelligenten Sitzsystems, beispielsweise in Form eines CAIS Systems (CAIS System = crash active intelligent seat system).

Das System kann in dem in Fig. 1 gezeigten Fahrzeug angeordnet sein. Das System umfasst neben einem Sensor 106, einer Auslöselogik 108, beispielsweise in Form eines Airbag- oder Sicherheitssteuergerät (Airbag/Safety ECU) und einem Aktuator 104, einen weiteren Sensor 206, einen weiteren Aktuator 204 und weitere Einrichtungen, die nachfolgend näher beschrieben werden. Bei den Einrichtungen 104, 106, 108 kann es sich um die anhand von Fig. 1 beschriebenen Einrichtungen handeln kann

Gemäß diesem Ausführungsbeispiel ist die Auslöselogik als Sicherheitssteuergerät 108 ausgeführt und umfasst ein Fahrzeug-Dynamik-Modul 222, eine Einrichtung 224 zur Situationsinterpretation und eine Einrichtung 226 zur Triggerentscheidung. Das Sicherheitssteuergerät 108 kann als eine integrierte Schaltung beispielsweise in Form eines ASICs oder FPGAs ausgeführt sein.

Der Sensor 106 steht gemäß diesem Ausführungsbeispiel stellvertretende für einen oder mehrere Intertialsensoren und der Sensor 206 für einen oder mehrere Umfeldsensoren.

Der Sensor 106 ist ausgebildet, um ein Sensorsignal an das Fahrzeug-Dynamik-Modul 222 auszugeben. Das Fahrzeug-Dynamik-Modul 222 ist ausgebildet, um basierend auf dem Sensorsignal eine Dynamik des Fahrzeugs zu bestimmen. Der Sensor 206 ist ausgebildet, um ein weiteres Sensorsignal an die Einrichtung 224 zur Situationsinterpretation auszugeben. Die Einrichtung 224 zur Situationsinterpretation ist ausgebildet, um eine aktuelle Situation, in der sich das Fahrzeug befindet, basierend auf dem weiteren Sensorsignal zu interpretieren. Die Einrichtung 226 zur Triggerentscheidung ist ausgebildet, um basierend auf den an die Auslöselogik 108 bereitgestellten Daten der Sensoren 106, 206 eine Auslöseentscheidung für ein oder mehrere Insassenschutzmittel zu treffen und entsprechende Auslösesignale 109 zur Aktivierung der Aktuatoren 104, 204 auszugeben.

Der Aktuator 104 steht stellvertretend für einen oder für eine Mehrzahl von Aktuatoren zum Betätigen einer Seitenhaltfunktion eines Sitzes des Fahrzeugs, beispielsweise in Form von Enveloping Side Adjustment Aktuatoren (ESA). Der Aktuator 104 ist ausgebildet, um ein Auslösesignal 109 direkt von der Einrichtung 226 zur Triggerentscheidung zu empfangen. Zur Energieversorgung ist der Aktuator 104 über eine elektrische Leitung mit einer Energieversorgung 230 verbunden. Die Energieversorgung 230 kann eine normale 13V Energieversorgung oder eine Energieversorgung mit mehr als 13V entsprechend einem erweiterten Konzept sein. Der Aktuator 104 ist ausgebildet, um seine Aktuatorfunktion auszuführen, wenn der Aktuator 104 von der Energieversorgung 230 mit Energie versorgt wird und das Auslösesignal 109 empfängt.

Der Aktuator 204 steht stellvertretend für einen oder für eine Mehrzahl von Aktuatoren zur Verstellung von Verstellebenen des Sitzes, beispielsweise in Form von Accelerated Seat Adjustment Aktuatoren (ASA). Zum Ansteuern des Aktuators 204 ist eine Steuereinrichtung 232 in Form eines Sitzsteuergeräts (Seat ECU CAIS) für einen Crash aktiven intelligenten Sitz (CAIS) vorgesehen. Die Steuereinrichtung 232 ist ausgebildet, um ein Auslösesignal 109 von der Einrichtung 226 zur Triggerentscheidung zu empfangen und abhängig davon Energie in Form eines Signals "power" an den Aktuator 204 bereitzustellen. Der Aktuator 204 ist ausgebildet, um seine Aktuatorfunktion auszuführen, wenn der Aktuator 204 von der Steuereinrichtung 232 mit Energie versorgt wird. Der Aktuator 204 ist ausgebildet, um ein Signal an die Steuereinrichtung 232 auszugeben.

Das System umfasst ferner einen Einstellschalter 234, eine Steuereinrichtung 236 in Form eines Komfortsteuergeräts (Seat-ECU comfort) und Aktuatoren 238 für Komfortfunktionen, wie Lordose oder Massage. Der Einstellschalter 234 kann beispielsweise von einem Insassen des Fahrzeugs bedient werden. Der Einstellschalter 234 ist ausgebildet, um ein Schaltsignal, das eine Schaltstellung des Einstellschalters 234 repräsentiert an das Sicherheitssteuergerät 108 sowie an die Steuereinrichtung 236 auszugeben. Das Schaltsignal und somit ein Zustand der Aktuatoren 238 kann von der Einrichtung 226 zur Triggerentscheidung zum Treffen der Auslöseentscheidung verwendet werden. Die Steuereinrichtung 236 ist ausgebildet, um abhängig von dem Schaltsignal Energie zur Betätigung der Aktuatoren 238 an die Aktuatoren 238 bereitzustellen. Um Energie an die Aktuatoren 204, 238 bereitstellen zu können, werden die Steuereinrichtungen 232, 236 von der Energieversorgung 230 über eine Leitung mit Energie versorgt. Die Aktuatoren 238 sind ausgebildet, um ein Signal an die Steuereinrichtung 236 auszugeben.

Die Einrichtungen 206, 224, 104, 204, 238, 234, 232, 236 sind optional und können entfallen oder durch andere geeignete Einrichtungen ersetzt werden. Bei den Einrichtungen 106, 206 handelt es sich um Sensoren. Bei den Einrichtungen 104, 204, 238 handelt es sich um Aktuatoren. Bei den Einrichtungen 108, 232, 236 handelt es sich jeweils um eine Steuereinheit. Die Einrichtungen 222, 224, 226 können als Software-Module ausgeführt sein.

Ein sitzbasiertes System, wie es in Fig. 2 gezeigt ist, zeichnet sich durch eine hohe Vernetzung aus. Die Verstellung der Verstellebenen, beispielsweise der Sitzlängsverstellung, Sitzneigung, Sitzhöhe und Sitzlehnenneigung, Aktuatoren 204 (ASA)) wird in einem Precrash Szenario von dem Sicherheitssteuergerät 108 via Trigger und ggf. durch Angabe einer Soll-Position angefordert und über das Sitzsteuergerät 232 schließlich umgesetzt. Die Funktionalität der Aktuatoren 104 (ESA) wird nicht über das Sitzsteuergerät gesteuert, sondern direkt von dem Sicherheitssteuergerät 108 angefragt und in einer privaten Elektronik am Aktuator 104 umgesetzt.

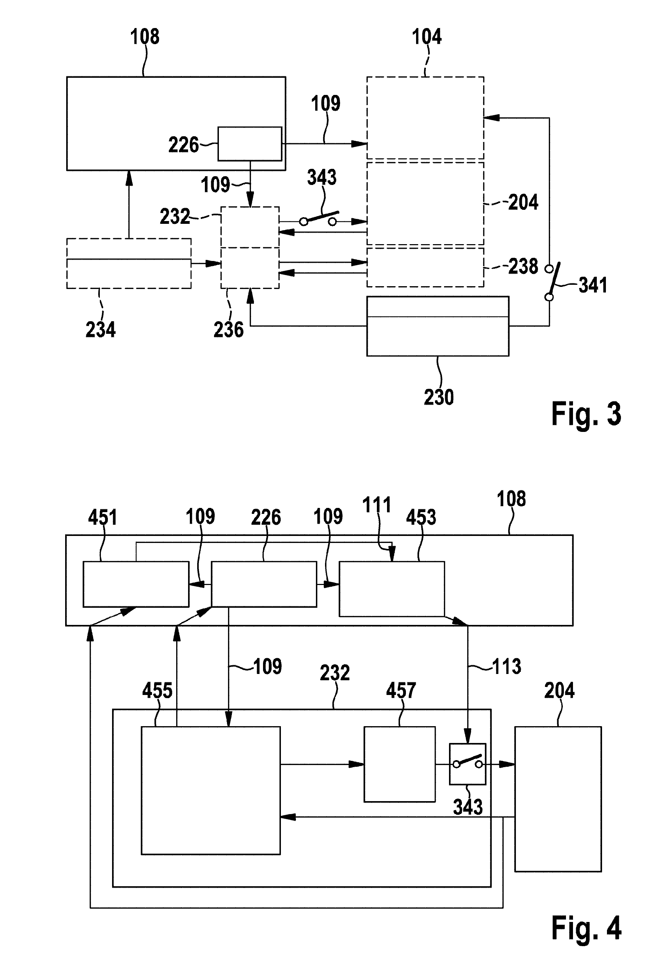

Fig. 3 zeigt ein Blockschaltbild des Systems zur Ansteuerung von Rückhaltemitteln, wie es bereits anhand von Fig. 2 beschrieben ist. Nicht gezeigt sind in Fig. 3 die Sensoren und die entsprechenden Auswerteeinrichtungen des Sicherheitssteuergeräts 108. Gemäß dem in Fig. 3 gezeigten Ausführungsbeispiel weist das System zusätzlich zu den bereits anhand von Fig. 2 beschriebenen Merkmalen zwei Schalter 341, 343 auf.

Der Schalter 341 ist in einer Energieversorgungsleitung angeordnet, die die Energieversorgung 230 mit dem Aktuator 104 verbindet. Ist der Schalter 341 geschlossen, so wird der Aktuator 104 über die Energieversorgungsleitung von der Energieversorgung 230 mit Energie versorgt. Ist der Schalter 341 geöffnet, so wird der Aktuator 104 nicht mit Energie versorgt und ist somit gesperrt.

Der Schalter 343 ist in einer weiteren Energieversorgungsleitung angeordnet, die das Sitzsteuergerät 232 mit dem Aktuator 204 verbindet. Ist der Schalter 343 geschlossen, so wird der Aktuator 204 über die weitere Energieversorgungsleitung von dem Sitzsteuergerät 232 mit Energie versorgt. Ist der Schalter 343 geöffnet, so wird der Aktuator 204 nicht mit Energie versorgt und ist somit gesperrt.

Eine Schaltstellung der Schalter 341, 343 kann von einer Vorrichtung zur Steuerung der Aktuatoren 104, 204 gesteuert werden, wie sie in Fig. 1 gezeigt ist und auch in den nachfolgenden Figuren näher beschrieben wird.

Somit besteht die Möglichkeit einen der oder die Aktuatoren 104, 204 zu sperren. Dies kann redundant durch Hardware, beispielsweise durch die in Fig. 3 gezeigten Schalter 341, 343 geschehen. Dadurch wird eine Vorrichtung zur redundanten Ansteuerung von sitzbasierten Rückhaltemitteln realisiert.

Gemäß dem in Fig. 3 gezeigten Ausführungsbeispiel findet ein Einfügen von Hardwareschaltern 341, 343 für die Funktion ASA, die dem Aktuator 204 zugeordnet ist und die Funktion ESA, die dem Aktuator 104 zugeordnet ist, statt. Unter Berücksichtigung einer gewünschten Unabhängigkeit kann eine höhere Integration der Schalter 341, 343 realisiert werden. So kann der ASA-Hardware-Schalter 343 auch in den Integrationsknoten des Sitzsteuergeräts 232 verlegt werden. Der ESA-Hardware-Schalter 341 kann auch in den Integrationsknoten des ESA-Aktuators 104 gelegt werden.

Fig. 4 zeigt ein Blockschaltbild eines Systems zur Ansteuerung von Rückhaltemitteln gemäß einem Ausführungsbeispiel der vorliegenden Erfindung. Das System umfasst ein Sicherheitssteuergerät 108 mit einem Trigger 226, einen Aktuator 204 (ASA) und ein Sitzsteuergerät 232 sowie einen Schalter 343, wobei es sich bei diesen Einrichtungen um die bereits anhand der vorangegangenen Figuren beschriebenen Einrichtungen handeln kann, auf deren Beschreibung hier verwiesen wird.

Das Sicherheitssteuergerät 108 weist neben dem Trigger 226 eine Diagnoseeinrichtung 451 in Form einer CAIS-Diagnose und eine Freigabelogik 453 in Form einer CAIS-Freigabelogik auf. Die Einrichtungen 451, 453 können Teil einer Vorrichtung zur Steuerung des Aktuators 204 sein, wie sie anhand von Fig. 1 beschrieben ist.

Das Sitzsteuergerät 232 weist eine Logik 455 und eine Energieversorgung 457 auf.

Der Aktuator 204 ist ausgebildet, um eine Verstellinformation von dem Aktuator 204 auszugeben. Die Logik 455 und die Diagnoseeinrichtung 451 sind ausgebildet, um die Verstellinformation von dem Aktuator 204 zu empfangen. Die Logik 455 ist ausgebildet, um basierend auf der Verstellinformation von dem Aktuator 204 eine Ist-Position des Aktuators 204 zu bestimmen und an den Trigger 226 auszugeben. Der Trigger 226 ist ausgebildet, um sowohl ein Triggersignal 109 oder ein Auslösesignal als auch eine Soll-Position für den Aktuator 204 zu bestimmen und an die Logik 455 auszugeben. Die Logik 455 ist ausgebildet, um abhängig von dem Triggersignal 109 und der Soll-Position, die die Logik 455 von dem Trigger 226 empfängt sowie der Ist-Position ein Steuersignal an die Energieversorgung 457 auszugeben. Die Energieversorgung 457 ist ausgebildet, um das Steuersignal von der Logik 455 zu empfangen und abhängig davon Energie zum Betreiben des Aktuators 204 über eine Leitung an den Aktuator 204 bereitzustellen. Gemäß diesem Ausführungsbeispiel ist die Logik 455 ausgebildet, um das Steuersignal zur Aktivierung der Energieversorgung 457 für den Aktuator 204 auszugeben, wenn der Trigger 226 eine Aktivierung des Aktuators 204 anzeigt und der Aktuator 206 die Soll-Position noch nicht erreicht hat.

Die Diagnoseeinrichtung 451 ist ausgebildet, um die Verstellinformation von dem Aktuator 204 und das Triggersignal 109 von dem Trigger 226 zu empfangen und basierend darauf ein Freigabesignal 111 zu erzeugen und an die Freigabelogik 453 auszugeben. Die Freigabelogik 453 ist ausgebildet, um neben dem Freigabesignal 111 der Diagnoseeinrichtung 451 das Triggersignal 109 von dem Trigger 226 zu empfangen und basierend darauf ein Schaltsignal 113 zum Schalten des Schalters 343 zu erzeugen und an den Schalter 343 auszugeben. Abhängig von dem Schaltsignal 113 wird der Schalter 343 geöffnet oder geschlossen, sodass der Aktuator 204 entweder nicht mit Energie versorgt wird oder mit Energie über den Schalter 343 versorgt wird. Bewirkt das Schaltsignal 113 eine Öffnung des Schalters 343 so fungiert es als Sperrsignal für den Aktuator 204. Wird der Aktuator 204 nicht mit Energie versorgt, so ist eine Funktion des Aktuators 204 gesperrt.

Gemäß diesem Ausführungsbeispiel ist die Freigabelogik 453 ausgebildet, um eine Öffnung des Schalters 343 und damit eine Sperrung des Aktuators 204 abhängig von einem über die Verstellinformation des Aktuators 204 angezeigten Betriebszustand oder Betätigungszustand des Aktuators 204 durchzuführen. So kann der Aktuator 204 beispielsweise gesperrt werden, wenn von dem Trigger 226 kein Triggersignal 109 zur Betätigung des Aktuators 204 bereitgestellt wird, die Verstellinformation des Aktuators 204 jedoch eine Betätigung des Aktuators 204 anzeigt. Zusätzlich oder alternativ kann der Aktuator 204 beispielsweise gesperrt werden, wenn eine aus der Verstellinformation des Aktuators 204 ermittelte Verstellposition des Aktuators 204 ein Erreichen oder ein Überschreiten der Soll-Position des Aktuators 204 anzeigt, obwohl weiterhin von dem Trigger 226 ein Triggersignal 109 zur Betätigung des Aktuators 204 bereitgestellt wird.

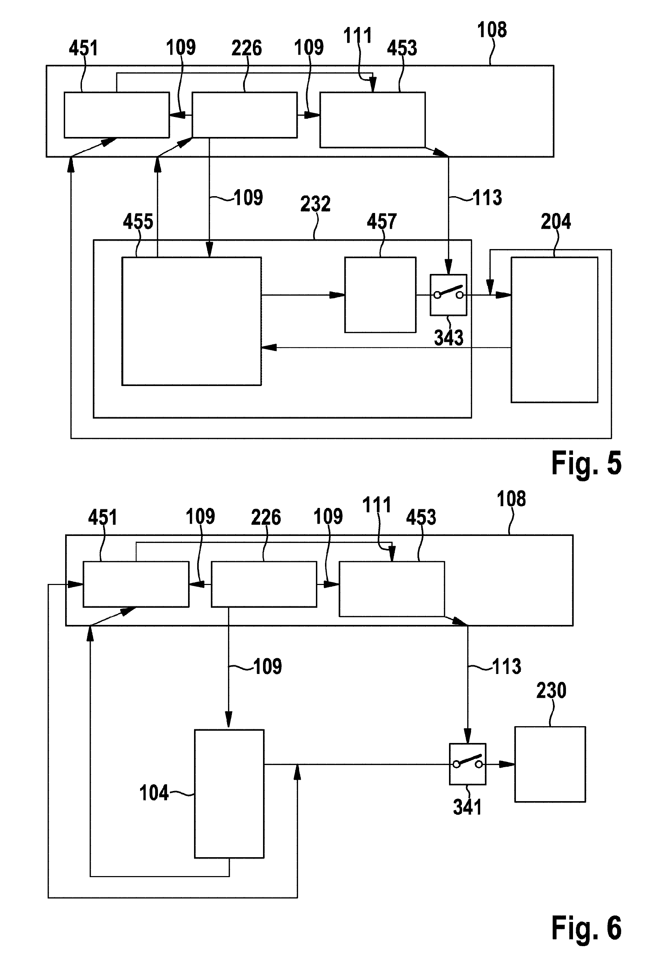

Beispielhaft wird im Folgenden anhand von Fig. 4 ein Ausführungsbeispiel der Erfindung beschrieben, bei dem eine Überwachung des Aktuators 204 realisiert wird. Auf Basis der Überwachung des Aktuators 204 kann der Schalter 343 gesteuert werden. Dieser Ansatz kann in entsprechender Weise zusätzlich oder alternativ auch für andere Aktuatoren und andere Schalter eingesetzt werden, wie es beispielsweise anhand von Fig. 6 gezeigt ist.

Ziel einer Überwachungseinheit, die gemäß dem in Fig. 4 gezeigten Ausführungsbeispiel die Diagnoseeinrichtung 451 und die Freigabelogik 453 umfasst ist, sicherzustellen, dass zum einen der Verstellweg des Aktuators 204 den vorgesehenen Bereich nicht überschreitet und zum anderen, dass der Sitz durch den Aktuator 204 nur dann schnell verstellt wird, wenn der Trigger 109 durch den Trigger 226 gesetzt wurde.

Der Verstellweg kann zeitgesteuert begrenz werden. Hierzu ist kein Signal vom Sitzsteuergerät 232 oder dem Aktuator 204 nötig. In diesem Fall ist die Diagnoseeinrichtung 451 ausgebildet, um im Precrashfall bei dem der Trigger 109 anliegt, nach einer gewissen Zeit die Versorgung des Aktuators 204 über die Freigabelogik 453 zu unterbrechen.

Vorteilhaft ist es, die Überwachungseinheit 451, 343 für die Funktion ASA des Aktuators 204 außerhalb des Sitzsteuergerätes 232 anzuordnen, damit hier keine Common-Cause Fehler entstehen können. Das Sicherheitssteuergerät 108 bietet sich als Integrationsknoten für die Logik 451, 453 an, da zum einen hier die Triggerentscheidung im Trigger 226 getroffen wird. Ferner ist das Sicherheitssteuergerät 108 leistungsfähig genug, um eine Diagnose zu rechnen und nicht zuletzt ist dieses System als sicherheitskritisches System bereits hinreichend robust ausgelegt. Eine geeignete Architektur der Überwachungseinheit wird anhand der in den nachfolgenden Figuren gezeigten Ausführungsbeispiele vorgestellt.

Für die Überwachung des Aktuators 204 gegen unbeabsichtigte schnelle Verstellung ist ein Eingangsignal aus dem Aktuator 204 notwendig. Eine detaillierte Verschaltung, beispielhaft für die Funktion ASA gezeigt, ist dabei in Fig. 5 dargestellt.

Eine Fehlfunktion des Sitzsteuergerätes 457, die beispielsweise eine hohe Verstellgeschwindigkeit ohne Trigger 109 durch das Sicherheitssteuergerät 108 bewirkt kann durch die Diagnoseeinrichtung 451 erkannt werden. Ansprechend auf das Erkennen der Fehlfunktion kann das System durch die Freigabelogik 453 nach sehr kurzem Verstellweg gestoppt werden.

Das CAIS-Diagnose Modul 451 in dem Sicherheitssteuergerät 108 ist ausgebildet, um die Rohinformationen des Aktuators 204 zu überwachen. Bei den Rohinformationen, die beispielsweise über die Verstellinformation von dem Aktuator 204 bereitgestellt werden können, kann es sich z. B. um Hallimpulse eines mit dem Aktuator 204 gekoppelten Hallsensors handeln, von denen eine bestimmte Anzahl pro Motordrehung eines Motors des Aktuators 204 erzeugt wird. Wenn die Pulsfolge eine sehr schnelle Verstellung des Aktuators 204 signalisiert, ohne dass der Trigger 109 des Triggers 226 anliegt, ist die CAIS Freigabe 453 ausgebildet, um den Schalter 343 nach der Endstufe, beispielsweise in Form der Energieversorgung 457 zu sperren.

Ferner kann in einem solchen System die Diagnoseeinrichtung 451 zusätzlich oder alternativ ausgebildet sein, um zur redundanten Wegbegrenzung HallImpulse des Aktuators 204 zu zählen und ab einer definierten Anzahl von Hall-Impulsen die Energieversorgung des Aktuators 204 über ein Öffnen des Schalters 343 zu unterbrechen.

Fig. 5 zeigt ein Blockschaltbild eines Systems zur Ansteuerung von Rückhaltemitteln gemäß einem Ausführungsbeispiel der vorliegenden Erfindung. Das System entspricht dem anhand von Fig. 4 gezeigten Ausführungsbeispiel mit dem Unterschied, dass die Diagnoseeinrichtung 451 nicht die Verstellinformation von dem Aktuator 204, sondern einen Abgriff der Versorgung der Endstufe 457 empfängt. Dazu ist die die Diagnoseeinrichtung 451 über eine Leitung mit der Versorgungsleitung zwischen dem Schalter 343 und dem Aktuator 204 gekoppelt. Somit ist die Diagnoseeinrichtung 451 ausgebildet, um ein Signal darüber zu empfangen, ob der Aktuator 204 aktuell mit Energie versorgt wird oder nicht. Die Diagnoseeinrichtung 451 ist ausgebildet, um den Abgriff der Versorgung der Endstufe 457 und das Triggersignal 109 von dem Trigger 226 zu empfangen und basierend darauf ein Freigabesignal 111 zu erzeugen und an die Freigabelogik 453 auszugeben.

Gemäß diesem Ausführungsbeispiel ist die Freigabelogik 453 ausgebildet, um eine Öffnung des Schalters 343 und damit eine Sperrung des Aktuators 204 abhängig von einem über den Abgriff der Versorgung der Endstufe 457 angezeigten Zustand einer Energieversorgung des Aktuators 204 durchzuführen. So kann der Aktuator 204 beispielsweise gesperrt werden, wenn von dem Trigger 226 kein Triggersignal 109 zur Betätigung des Aktuators 204 bereitgestellt wird, der Abgriff der Versorgung der Endstufe 457 jedoch eine zum Betrieb des Aktuators 204 geeignete Energieversorgung des Aktuators 204 anzeigt.

Somit kann die Vorrichtung 451, 453 zur Steuerung des Aktuators 204 die Leistungsversorgung des Aktuators 204 analysieren. Entspricht die Leistungsversorgung einer schnellen Verstellung des Aktuators 204, so wird bei fehlendem Triggersignal des Triggers 226 die Versorgung des Aktuators 204 unterbrochen.

In dem in Fig. 5 gezeigten Ausführungsbeispiel einer Überwachung und Absicherung für die Funktion ASA ist der Schalter 343 in das Sitzsteuergerät 232 integriert und die Überwachungseinheit 451, 453 ist in das Sicherheitssteuergerät 108 integriert.

Fig. 6 zeigt ein Blockschaltbild eines Systems zur Ansteuerung von Rückhaltemitteln gemäß einem Ausführungsbeispiel der vorliegenden Erfindung. Das System umfasst ein Sicherheitssteuergerät, einen Aktuator 104 (ESA), eine Energieversorgung 230 und einen Schalter 341. Das Sicherheitssteuergerät 108 umfasst einen Trigger 226, eine Diagnoseeinrichtung 451 in Form einer CAIS-Diagnose und eine Freigabelogik 453 in Form einer CAIS Freigabelogik. Das Sicherheitssteuergerät 108 entspricht dem bereits anhand der Figuren 4 und 5 beschriebenen Sicherheitssteuergerät. Bei dem Aktuator 104, dem Schalter 341 und der Energieversorgung 230 handelt es sich um die bereits anhand von Fig. 3 beschriebenen Elemente. Somit ist der Aktuator 104 als Aktuator für die Funktion ESA ausgeführt.

Die Energieversorgung 230 ist ausgebildet, um fortlaufend Energie zum Betreiben des Aktuators 104 über eine Leitung an den Aktuator 104 bereitzustellen. In der Leitung ist der Schalter 341 angeordnet. Wird der Schalter 341 geöffnet, so wird die Energieversorgung des Aktuators 104 unterbrochen und der Aktuator 104 ist gesperrt. Der Trigger 226 ist ausgebildet, um ein Triggersignal 109 oder ein Auslösesignal für den Aktuator 104 zu bestimmen und an den Aktuator 104 auszugeben. Wir der Aktuator 104 mit Energie von der Energieversorgung 230 versorgt, so ist der Aktuator 104 ausgebildet, um ansprechend auf einen Empfang des Triggersignals 109 zu agieren, beispielsweise einen Verstellmotor zu betreiben.

Der Aktuator 104 ist ausgebildet, um eine Verstellinformation von dem Aktuator 104 auszugeben. Die Verstellinformation kann beispielsweise eine aktuelle Verstellposition des Aktuators 104 anzeigen. Die Diagnoseeinrichtung 451 ist ausgebildet, um die Verstellinformation von dem Aktuator 104 zu empfangen. Ferner ist die Diagnoseeinrichtung 451 ausgebildet, um einen Abgriff der Leistung zu empfangen, die von der Energieversorgung 230 über den Schalter 341 an den Aktuator 104 bereitgestellt wird. Dazu ist die die Diagnoseeinrichtung 451 über eine Leitung mit der Versorgungsleitung zwischen dem Schalter 341 und dem Aktuator 104 gekoppelt. Somit ist die Diagnoseeinrichtung 451 ausgebildet, um ein Signal darüber zu empfangen, ob der Aktuator 204 aktuell mit Energie versorgt wird oder nicht. Die Diagnoseeinrichtung 451 ist ferner ausgebildet, um das Triggersignal 109 von dem Trigger 226 zu empfangen. Basierend auf dem Triggersignal 109, der Verstellinformation von dem Aktuator 104 und zusätzlich oder alternativ dem Abgriff der Leistung ist die Diagnoseeinrichtung 451 ausgebildet, um ein Freigabesignal 111 zu erzeugen und an die Freigabelogik 453 auszugeben.

Die Freigabelogik 453 ist ausgebildet, um neben dem Freigabesignal 111 der Diagnoseeinrichtung 451 das Triggersignal 109 von dem Trigger 226 zu empfangen und basierend darauf ein Schaltsignal 113 zum Schalten des Schalters 341 zu erzeugen und an den Schalter 341 auszugeben. Abhängig von dem Schaltsignal 113 wird der Schalter 341 geöffnet oder geschlossen, sodass der Aktuator 104 entweder nicht mit Energie versorgt wird oder mit Energie über den Schalter 341 versorgt wird. Wird der Aktuator 104 nicht mit Energie versorgt, so ist eine Funktion des Aktuators 204 gesperrt.

Gemäß diesem Ausführungsbeispiel ist die Freigabelogik 453 ausgebildet, um eine Öffnung des Schalters 341 und damit eine Sperrung des Aktuators 104 abhängig von einem über die Verstellinformation des Aktuators 104 angezeigten Betriebszustand oder Betätigungszustand des Aktuators 104 und zusätzlich oder alternativ einem Zustand einer Energieversorgung des Aktuators 104 durchzuführen. So kann der Aktuator 104 beispielsweise gesperrt werden, wenn von dem Trigger 226 kein Triggersignal 109 zur Betätigung des Aktuators 104 bereitgestellt wird, die Verstellinformation des Aktuators 104 jedoch eine Betätigung des Aktuators 104 anzeigt. Zusätzlich oder alternativ kann der Aktuator 104 beispielsweise gesperrt werden, wenn von dem Trigger 226 kein Triggersignal 109 zur Betätigung des Aktuators 104 bereitgestellt wird, der Abgriff der Leistung an dem Aktuator 104 jedoch eine zum Betrieb des Aktuators 104 geeignete Energieversorgung des Aktuators 104 anzeigt.

In dem in Fig. 6 gezeigten Ausführungsbeispiel einer Überwachung und Absicherung für die Funktion ESA können die Eingangsdaten für die CAIS-Diagnose Einheit 451 Aktuator Verstellsignale und/oder Leistungssignale sein.

Bei den beschriebenen Ausführungsbeispielen kann eine separate Leitung für die redundante Freischaltung der Aktuatoren vorgesehen sein.

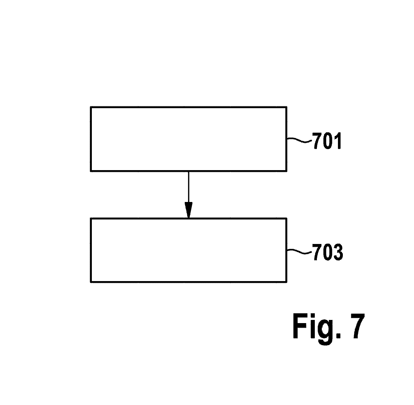

Fig. 7 zeigt ein Ablaufdiagramm eines Verfahrens zur Steuerung eines Aktuators gemäß einem Ausführungsbeispiel der vorliegenden Erfindung. Der Aktuator kann stellvertretend für einen oder mehrere der im vorangehenden beschriebenen Aktuatoren verstanden werden. In einem Schritt 701 wird ein Auslösesignal empfangen, das zur Aktivierung des Aktuators und damit der Insassenschutzvorrichtung geeignet ist. In einem Schritt 703 wird ein Sperrsignal zum Sperren des Aktuators abhängig von dem Auslösesignal und einem Freigabesignal erzeugt. Das Sperrsignal kann ausgegeben werden, um eine Sperrung des Aktuators zu bewirken. Beispielsweise kann das Sperrsignal eingesetzt werden, um eine Energieversorgung für den Aktuator zu unterbrechen. Das Freigabesignal kann auf einer Zustandsbeobachtung des Aktuators basieren. Beispielsweise kann das Freigabesignal auf einem Zustand einer Energieversorgung, einem Betriebszustand oder Betätigungszustand des Aktuators basieren.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zur Steuerung eines Aktuators (104; 204) einer sitzbasierten Insassenschutzvorrichtung (102) eines Fahrzeugs (100), das die folgenden Schritte umfasst:
Empfangen (701) eines Auslösesignals (109), das ausgebildet ist, um eine Auslöseentscheidung zum Auslösen der sitzbasierten Insassenschutzvorrichtung (102) anzuzeigen; und
Erzeugen (703) eines Sperrsignals (113) zum Sperren des Aktuators (104; 204) abhängig von dem Auslösesignal und einem Freigabesignal (111).

2. Verfahren gemäß Anspruch 1, bei dem das Sperrsignal geeignet ist, um eine Energieversorgung (230; 457) des Aktuators (104; 204) zu unterbrechen.

3. Verfahren gemäß einem der vorangegangenen Ansprüche, bei dem das Freigabesignal (111) ausgebildet ist, um eine Zeitdauer ab einer Auslösung der Insassenschutzvorrichtung (102) anzuzeigen, und bei dem im Schritt (703) des Erzeugens das Sperrsignal (113) zum Sperren des Aktuators (104; 204) abhängig von der von dem Freigabesignal angezeigten Zeitdauer erzeugt wird.

4. Verfahren gemäß einem der vorangegangenen Ansprüche, bei dem das Freigabesignal (111) ausgebildet ist, um einen Zustand einer Energieversorgung (230; 457) des Aktuators (104; 204) anzuzeigen, und bei dem im Schritt (703) des Erzeugens das Sperrsignal (113) erzeugt wird, wenn das Auslösesignal (109) keine Auslöseentscheidung zum Auslösen der Insassenschutzvorrichtung (102) anzeigt und das Freigabesignal eine zur Auslösung der Insassenschutzvorrichtung geeignete Energieversorgung anzeigt.

5. Verfahren gemäß einem der vorangegangenen Ansprüche, bei dem das Freigabesignal (111) ausgebildet ist, um einen Betriebszustand des Aktuators (104; 204) anzuzeigen, und bei dem im Schritt (703) des Erzeugens das Sperrsignal (113) erzeugt wird, wenn das Auslösesignal (109) keine Auslöseentscheidung zum Auslösen der Insassenschutzvorrichtung (102) anzeigt und das Freigabesignal einen Betrieb des Aktuators anzeigt.

6. Verfahren gemäß einem der vorangegangenen Ansprüche, bei dem das Freigabesignal (111) ausgebildet ist, um einen Betätigungszustand des Aktuators (104; 204) anzuzeigen, und bei dem im Schritt des Erzeugens (703) das Sperrsignal (113) erzeugt wird, wenn das Auslösesignal (109) eine Auslöseentscheidung zum Auslösen der Insassenschutzvorrichtung (102) anzeigt und das Freigabesignal einen von einem Sollzustand abweichenden Betriebszustand der Insassenschutzvorrichtung anzeigt.

7. Verfahren gemäß Anspruch 6, bei dem im Schritt des Empfangens (701) ein Wert des Sollzustands empfangen wird.

8. Vorrichtung (110) zur Steuerung eines Aktuators (104; 204) einer sitzbasierten Insassenschutzvorrichtung (102) eines Fahrzeugs (100), die ausgebildet ist, um die Schritte eines Verfahrens gemäß einem der Ansprüche 1 bis 7 durchzuführen.

9. Insassenschutzsystem für ein Fahrzeug (100), mit folgenden Merkmalen:
einem Aktuator (104; 204) zum Betätigen einer sitzbasierten Insassenschutzvorrichtung (102);
einem Schalter (341, 343) zum Unterbrechen einer Energieversorgung für den Aktuator (104; 204);
einer Vorrichtung (110) zur Steuerung gemäß Anspruch 8, die ausgebildet ist, um das Sperrsignal (113) zum Sperren des Aktuators zu erzeugen und als Schaltsignal an den Schalter auszugeben.

10. Computer-Programmprodukt mit Programmcode zur Durchführung des Verfahrens nach einem der Ansprüche 1 bis 7, wenn das Programm auf einer Vorrichtung ausgeführt wird.
